Europäisches Patentamt

**European Patent Office**

**Office européen des brevets**

(19)

(11) Publication number: **0 065 866**

A1

(12) **EUROPEAN PATENT APPLICATION**

(21) Application number: **82302513.5**

(22) Date of filing: **18.05.82**

(51) Int. Cl.³: **B 65 G 47/24**

(30) Priority: **18.05.81 GB 8115158**

(43) Date of publication of application:
**01.12.82 Bulletin 82/48**

(84) Designated Contracting States:
**AT BE CH DE FR GB IT LI LU NL SE**

(71) Applicant: **AYLESBURY AUTOMATION LIMITED**
**Mandeville Road**
**Aylesbury Buckinghamshire HP21 8AB(GB)**

(72) Inventor: **Quartermaine, Harold Alan**
**Pippins The Orchard**
**Eaton Bray Bedfordshire(GB)**

(74) Representative: **George, Roger David et al,**
**Raworth, Moss & Cook 36 Sydenham Road**
**Croydon Surrey CR0 2EF(GB)**

(54) Apparatus for orientating articles such as bottles, and orientating means therefor.

(57) An orientating apparatus for orientating articles, such as bottles, is disclosed. Apparatus has a bowl housing (10) with a rotary disc (20) therein inclined to the horizontal and transporting articles from a pick-up location to a discharge location (12). Orientating means at each pocket ensures a predetermined delivery attitude for each article viz base upwards or base downwards. Peripheral apertures (70) in the disc define article pockets (30) bound at first and second radial edge portions (71, 72) and a circumferential edge portion (73). Orientating means comprise first (61) and second (62) members at the first and second radial edges (71, 72) arranged at spaced locations below said edges, by spacer means on which they are releasably mounted. By this arrangement provision can be made for adjustment or ready replacement of the orientating members to avoid significant down time of the apparatus between handling batches of articles of different dimensions. Embodiments disclose arrangements handling necked bottles (B) with delivery neck down or neck up in end to end relation into a chute. Delivery from disc to chute may be assisted by air jet, vacuum or venturi techniques.

FIG 3

- 1 -

TITLE: APPARATUS FOR ORIENTATING ARTICLES SUCH AS BOTTLES, AND ORIENTATING MEANS THEREFOR.

This invention relates to apparatus for orientating articles such as bottles, and orientating means therefor.

Such orientating apparatus receives randomly orientated articles such as bottles and orientates each bottle to a particular attitude (e.g. base downwardly) prior to delivery, for example to a linear conveyor.

Such apparatus is disclosed in many patents amongst which are United Kingdom patent specification Nos. 1534207 (Rationator) and No. 1558379 (Hoehn), United States patent specification Nos. 3295659 (Aidlin), 3650368 (Nalbach) and 3662872 (Nalbach).

The Nalbach U.S. Patent No. 3662872 discloses a rotary machine in which pusher means are actuated to reciprocate vertically to transport bottles up ramps within a bowl feeder to two discharge stations, and the bottles are delivered into a plurality of chutes which rotate with the bowl: the number of chutes matches the number of pusher means. At the discharge stations, the bottles raised by the pusher means roll off an inclined support surface into the chutes. The orientating means for orientating the bottles from the horizontal to the vertical such that the bottles are delivered base downwardly into the chutes, comprise a cavity in the pusher means adapted to receive the bottle neck, and a plate. The bottle is transported by the pusher means with its axis (horizontal) along the direction of rotation of the bowl, and the orientating means ensures that the neck is entrained momentarily until the base of the bottle passes downwardly into the chute. Although the plate is adjustable to accommodate different lengths of bottle body any significant change in the dimensions of the bottle and its shape would require considerable re-tooling of the machine, particularly to change the pusher means. In addition the chutes are partitioned vertically and bottles received in the chutes are further rotated to the point of delivery to a linear conveyor in order to bring them to a stable attitude. The considerable number of structural elements of such a machine influences both the component and assembly costs of such a machine and the down-time necessary for maintenance and re-tooling for different bottles or like articles.

The Nalbach U.S. Patent No. 3650368 has a rotating structure below a feeder bowl and extending to the periphery of a stationary disc floor. A series of delivery chutes rotate around the bowl, which is inclined to the horizontal, and carry with them individual bottles from a pick-up location at a nadir of the bowl/disc interface to a discharge location at a zenith of the bowl/disc interface. Stationary support means ensures that the bottles cannot fall into the chutes until the discharge location is reached. The uppermost level of the chutes have orientating means formed by a projection or pin which enters the bottle neck and a ledge for the bottle base. Again the bottle traverses the bowl from the pick-up location to the discharge location with its axis aligned with the direction of travel. At the discharge location, the bottle falls base first into the associated chute and the bottle neck is entrained momentarily by the pin or ledge to ensure downward delivery of the bottle base. The scope for accommodating different bottle sizes and shapes is restricted by virtue of the fact that the pin and ledge project laterally from the radial chute walls. Although alternative tooling, instead of a pin, is disclosed, it is clear that the construction of an individual machine, once assembled, does not facilitate re-tooling for different bottles and that any such re-tooling would require a considerable down-time for the machine. In addition this machine also has vertically partitioned chutes and also further rotates the vertical bottles in the chutes to a point of delivery to a linear conveyor. Similar comments as to costs and down-time may be made as for the above machine.

The remaining patents mentioned above of Rationator, Hoehn and Aidlin disclose orientating apparatus of the type (hereinafter referred to as the type hereinbefore defined) which has a bowl housing, a rotary disc within the housing, the disc being inclined to the horizontal, pockets associated with the rotary disc for individually receiving an article, the disc when driven transporting articles each in a pocket with their axes extending longitudinally of the pocket from a pick-up location at a nadir of the bowl to which nadir fall articles delivered to the housing with random orientation towards a discharge location at or near a zenith of the bowl and disc interface at which discharge location each article is discharged from its pocket, and orientating means associated with each pocket to ensure a predetermined attitude of the article as the article leaves its pocket, a stationary support member below the rotary disc extending between the pick-up and discharge locations thereby retaining an article horizontally disposed in its pocket to the discharge location.

The Hoehn machine has a rotary disc which at its periphery carries concentric spaced ring members defining the pockets. Each pocket has two pairs of pins. The radial separation of the rings determines the maximum width or diameter of bottle which may be orientated, the radial separation of the pins of each pair of pins must be greater than the neck width of the bottle and less than its body width, the separation circumferentially between pairs of pins is determined by the body length of the bottle. These factors greatly limit the range of sizes and shapes of bottle which may be orientated by any particular machine of this kind. Replacement of the spaced ring members would involve considerable machine down-time and adjustment of the pins is impractical. This machine orientates the bottles with their necks downwardly for subsequent air or fluid scavenging in chutes into which they fall at the discharge location. A plurality of chutes are provided to accomplish further rotation of the bottles during scavenging and subsequent inversion prior to delivery to a linear conveyor.

The Rationator machine has a rotary disc of lesser diameter than the bowl. Segments supported by a plate below the rotary disc define the disc pockets (the overall diameter of the segments and the disc extends across the diameter of the bowl with a suitable radial clearance). Even though this construction permits different segments to be used with the rotary disc for different bottle lengths, the width of the pockets (i.e. the radial dimension) is fixed. Furthermore, the pockets are intended to exactly receive the body of a bottle (i.e. the pockets are apertures having very similar dimensions to the cross-section of the bottle body), with the neck overlying an adjacent disc segment. The articles or bottles do travel in the pockets with their axis aligned with their direction of travel which is advantageous in achieving a high feed rate. Orientation occurs because as the bottle tends to fall downwardly at the bowl discharge location, the bottle neck is entrained momentarily by virtue of resting on the adjacent disc segment until the bottle base has passed downwardly into a chute. Again this machine has a plurality of chutes, which are vertically divided, each individually associated with a pocket, which further rotate the bottles prior to final delivery to a linear conveyor. This is stated to be necessary to stabilize the bottles before final delivery.

The Aidlin machine also has pockets formed in a rotary disc but these are radially extending pockets. It has been found that such a machine cannot obtain the higher bottle feed rates of machines in which the pockets extend such that the bottles have their axes aligned with the direction of travel. Since the Aidlin machine has pocket openings dimensioned according to the cross-sectional dimensions of the bottle body (or main portion), a different disc is required for each different bottle: the pocket openings are bounded on all sides. The neck of a bottle will project radially beyond its pocket opening (either radially inwardly or outwardly of the pocket). The regions of the disc where the bottle necks may lie are contoured according to the neck configuration of the particular bottle to be orientated with that machine. Again, it will be evident that this is a further factor requiring different discs for bottles of different neck characteristics, even if different batches of bottles have the same bottle body dimensions and shape. The Aidlin machine does have a single stationary chute for travel of the bottles away from the bowl in an end to end manner (as opposed to the "radius to radius" delivery of the above machines). However, the bottles are merely allowed to fall into the chute, although it is suggested that a leaf spring suitably disposed at the discharge location, may assist the dispatch of the bottle into the chute.

Although it can be seen therefore that many attempts have been made to devise a satisfactory machine for orientating and delivery of articles, such as bottles, nevertheless there is still a requirement for a machine which efficiently orientates articles which are received in random order and which has a simplicity of design and construction that facilitates the use of one machine for separate runs of articles of different dimensions and shapes without the need to interchange many complex and expensive components between runs nor involving a considerable down-time between runs for different articles. Articles such as plastic bottles are coming into greater and greater use as a form of packaging in a wider variety of industries. Amongst the bottles available and currently used there are great variations in dimensions and shapes. The bottle has a body and a neck for a closure. The length and diameter (if cylindrical) or length, width and depth (if rectangular in section) of the body all may vary, as may the projection of the neck from the body and its lateral dimensions. The prior art machines suffer from the disadvantage that either the machine is tooled initially for one particular size and shape of bottle (and only accommodates relatively small variations in dimensions) or the machine has parts which conceivably may be interchanged with parts designed for use with a different size and/or shape of bottle but which to interchange entail a considerable down-time for the machine during which expensive plant, not only the orientating machine but other equipment on-line with it, is out of use. Obviously down-time becomes very costly in such circumstances and economic advantages are afforded to the user if this can be avoided. Furthermore, even if it is envisaged that one particular orientating machine will be employed for repeated runs during which the article/bottle has the same dimensions and shape, it is still advantageous for the orientating machine to have a design which enables simple setting up procedures for a given article and which has major

0065866

parts which may be readily adapted to a wide range of article dimensions and shapes and which for maintenance purposes reduces the down-time of the machine.

As discussed above many of the prior art machines also incorporate complex rotating structures with chutes for receiving articles orientated into a predetermined attitude and for further rotating the articles between the discharge location (from the bowl) to the point of final delivery to a linear conveyor. Often this further rotation is merely effected to stabilize the attitude of the articles which are then discharged "radius to radius" onto the linear conveyor. As has been stated the considerable number of structural elements of such machines influences both the component and assembly costs of the machines and the down-time necessary for maintenance and re-tooling for different bottles or like articles. Despite these disadvantages there has been a prejudice in this art away from employing a single stationary delivery chute at the bowl discharge location through which stationary chute the articles pass in end to end relationship. A major reason for this prejudice has been the difficulty hitherto of ensuring that each article which leaves the discharge location travels a sufficient distance down the chute to allow sufficient space for the next article to enter the chute.

According to one aspect of the present invention there is provided orientating means for use with orientating apparatus of the type hereinbefore defined having a rotary disc with peripheral apertures defining said pockets, each aperture being bound by a pair of radially extending edge portions of the rotary disc which define spaced, opposed lateral sides of the aperture and a circumferentially extending edge portion of the pocket extending between said lateral sides at the radially inner ends thereof,

characterised in that said orientating means comprise, for each of a plurality of apertures

a first orientating member for location relative to the rotary disc at a spaced position below a first said lateral edge and extending towards the second said lateral edge,

a second orientating member for location relative to the rotary disc at a spaced position below the second said lateral edge and extending towards the first said lateral edge,

a pair of spacer means each for mounting a respective one of said orientating members at or adjacent to a said lateral edge on said rotary disc, means for mounting each of said first and second orientating members on its respective spacer means.

With this arrangement of orientating members their separation can be matched to the length of article, e.g. the body portion of a bottle, which is received in a pocket, whereby a single machine may be readily tooled for a particular article.

Advantageously, said orientating means further comprise, for each of a plurality of apertures a third orientating member for location relative to the rotary disc at a spaced position above the first said lateral edge and extending towards the second said lateral edge, a further spacer means for mounting the third orientating member at or adjacent to the said first lateral edge, means for releasably mounting said third orientating member on its spacer means, wherein said first lateral edge is the trailing one of said first and second lateral edges of the rotary disc in the direction of rotation thereof. This third orientating member may be employed with advantage. Articles tend to lag in the direction of rotation. If the article is a bottle (for example) and the neck is leading, base downwards orientation will only occur if the neck overlies the second orientating member.

In this instance the third orientating member acts as an abutment for the base of the article (bottle) thereby ensuring that the neck does overlie the first orientating member. When a bottle lies with its neck trailing in the direction of travel, the neck will lie between the first and third orientating members.

In the described embodiments the orientating means are used in association with a rotary disc in which each aperture is open at the periphery of the disc. Nevertheless, the orientating means may be employed with a rotary disc having apertures bound on all sides by an edge portion of the disc, such pockets being located at a radial spacing from the periphery of the rotary disc.

In an embodiment the first mentioned spacer means space their orientating members relative to the rotary disc with a spacing selected such that a median plane through an article of predetermined depth positioned in a said pocket lies in the plane of the rotary disc.

According to a modification, the first mentioned spacer means may be replaceable whereby, for a given article, the spacer means may be selected for spacing their orientating members relative to the rotary disc such that a median plane through an article positioned in a said pocket lies in the plane of the rotary disc.

According to a further modification, the first mentioned spacer means may be adjustable for varying the spacing of the orientating members relative to the rotary disc whereby the spacer means may be adjusted for an article of particular dimensions to ensure that a median plane through that article when positioned in a said pocket lies in the plane of the rotary disc. Likewise the adjustment of the further spacer means is adjustable to enable the separation between the second and third orientating members to be adjusted to accommodate differently dimensioned article parts, _____

viz the bottle neck, therebetween.

In an embodiment said means for
mounting said orientating members on their spacer
means co-operates with adjustment means associated with
the orientating members whereby the orientating members
may be adjusted relative to their spacer means according to the dimensions of the article to be orientated.
Clearly this allows the adjustment of the machine for
different articles (e.g. bottles of different body
lengths) between runs of the machine for successive
batches of different articles.

According to a further aspect of the present
invention there is provided an orientating apparatus for
orientating articles such as bottles, of the type
hereinbefore defined characterised by orientating means
as defined in any one of the preceding consistory clauses.

In one preferred embodiment of the orientating
mahine at each aperture the circumferentially extending
edge portion of the pocket is defined by a disc element
mounted on the rotary disc. By arranging for the disc
elements to be releasably mounted, the pockets of a
machine can be initially set up by suitable choice of
disc element to ensure a radial pocket dimension suitable for an article of a given width:  each different
article width requiring a disc element of a
related radial dimension (when mounted). Nevertheless,
such an arrangement does enable a single machine to be
customised for articles having different widths.

In a preferred modification of this embodiment
the disc element has associated adjustment means
whereby the width of the pocket (its radially extending
dimension) may be varied for different article widths.
This arrangement has the further advantage that a
single machine may be adjusted between batches of
articles of different widths, whereby the machine may
be used to orientate a batch of articles of a first width and then for a subsequent use the disc elements may be adjusted such that the pockets widths are thereafter suitable to orientate a batch of articles of a second width.

The orientating machine may be further characterized by provision for adjusting the spacing between the rotary disc and the support means below the rotary disc thereby permitting this spacing to be adjusted in accordance with the depth of articles to be orientated, whereby an article having its median plane lying in the median plane of the rotary disc also rests on said support means.

The support means may comprise a support disc having a discharge aperture therein for location at the discharge location. The provision for adjustment of the spacing between the support disc and rotary disc may be effected either (a) by mounting the support disc on the bowl housing by means of adjustable mounting means at circumferentially spaced locations around this support disc, or (b) non-rotatably mounting the support disc on a drive shaft for rotating the rotary disc by means of a collar which is adjustable axially relative to the shaft.

In a preferred embodiment there is provided a single discharge chute at the discharge location characterized in that pneumatic means are provided for accelerating articles entering said chute away from the discharge location.

The pneumatic means may comprise air jets located above the discharge location. Alternatively, the chute may have such a configuration designed to produce a venturi effect on articles entering the chute. Still alternatively the pneumatic means may be provided by arranging that the air pressure at the chute immediately below the discharge station is sub-atmospheric, for example by means of air outlets in the chute wall or/walls said outlets being in communication with suction means. The air jets above the discharge location may be employed in combination with the venturi means or suction means. The air jets also assist the dispatch of the article from its pocket in addition to any acceleration of the article in the chute which may also result (depending on the air pressure applied).

The advantage that accrues from the use of pneumatic means to accelerate the articles relates to the need to ensure that the chute has sufficient clear space adjacent the discharge location to receive an article from the next pocket when that succeeding pocket arrives at the discharge location. As the chute is itself stationary, the radial inertia of the articles delivered to the chute is dissipated when the articles enter the chute. The width of the chute (its dimension in the direction of rotation of the rotary disc) may converge from its maximum dimension at the discharge location to a reduced dimension at a level below the discharge location. Once articles have travelled down the discharge chute their inertia is solely in their longitudinal direction of travel down the chute, whereby the provision of prior art machines for further rotation of the articles in order to stabilize them becomes unnecessary. The delivery chute may directly discharge the 'end-to-end' positioned articles to a linear conveyor or a conical delivery machine which receives the 'end-to-end' positioned articles and delivers them in 'radius-to-radius' manner to a linear conveyor. In the latter case, maintenance (or adjustment for different articles) of the orientating machine is not complicated by the structural features of the prior art orientating machines with rotating chute structures and maintenance of the conical delivery machine does not involve adjustment of structural components of the orientating machine.

Embodiments of the invention will now be described, by way of example only, with reference to the accompanying drawings, in which:-

Figs. 1A and 1B shows schematically in elevation, part of apparatus for orientating articles, incorporating orientating means according to a first embodiment of the present invention;

Fig. 2 shows, in a plan perspective view, part of apparatus for orientating articles incorporating adjustable orientating means according to a second embodiment of the present invention;

Fig. 3 shows the parts of the apparatus for orientating articles of Fig. 2 but in an underneath plan perspective view;

Fig. 4 shows a perspective view of apparatus for orientating articles;

Fig. 5 shows the apparatus of Fig. 4 with the rotary disc removed; and,

Fig. 6 shows the rotary disc of the apparatus of Fig. 4.

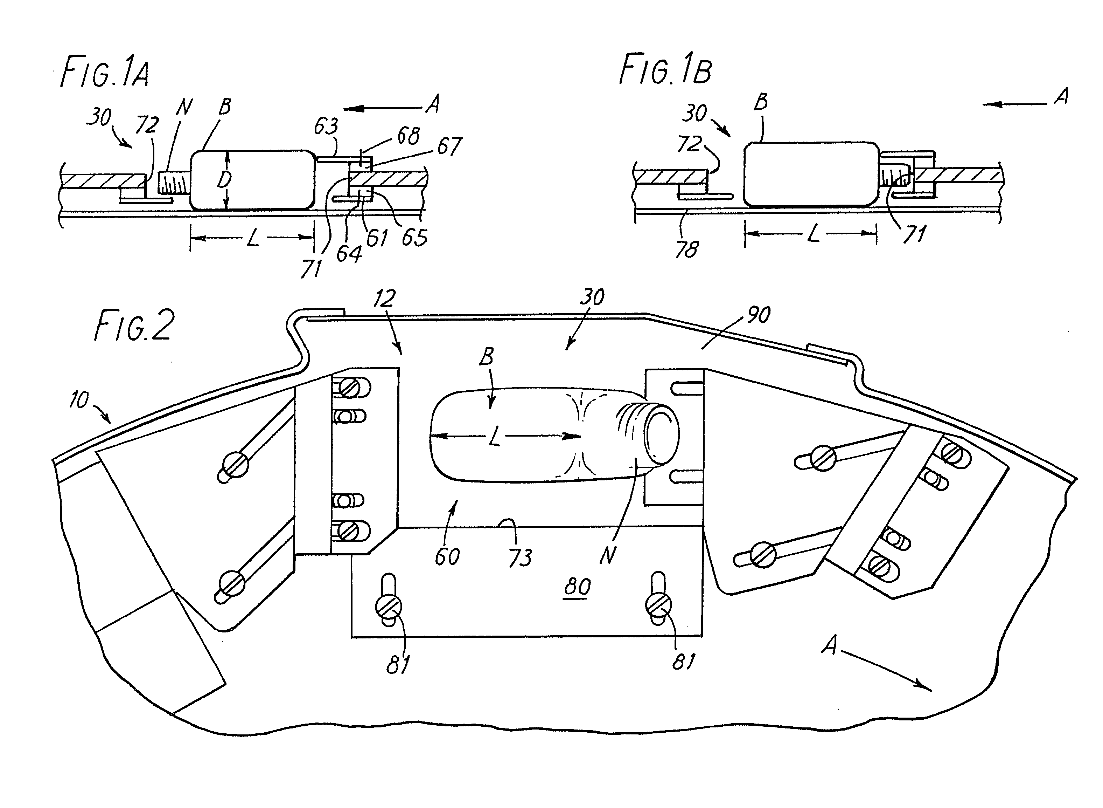

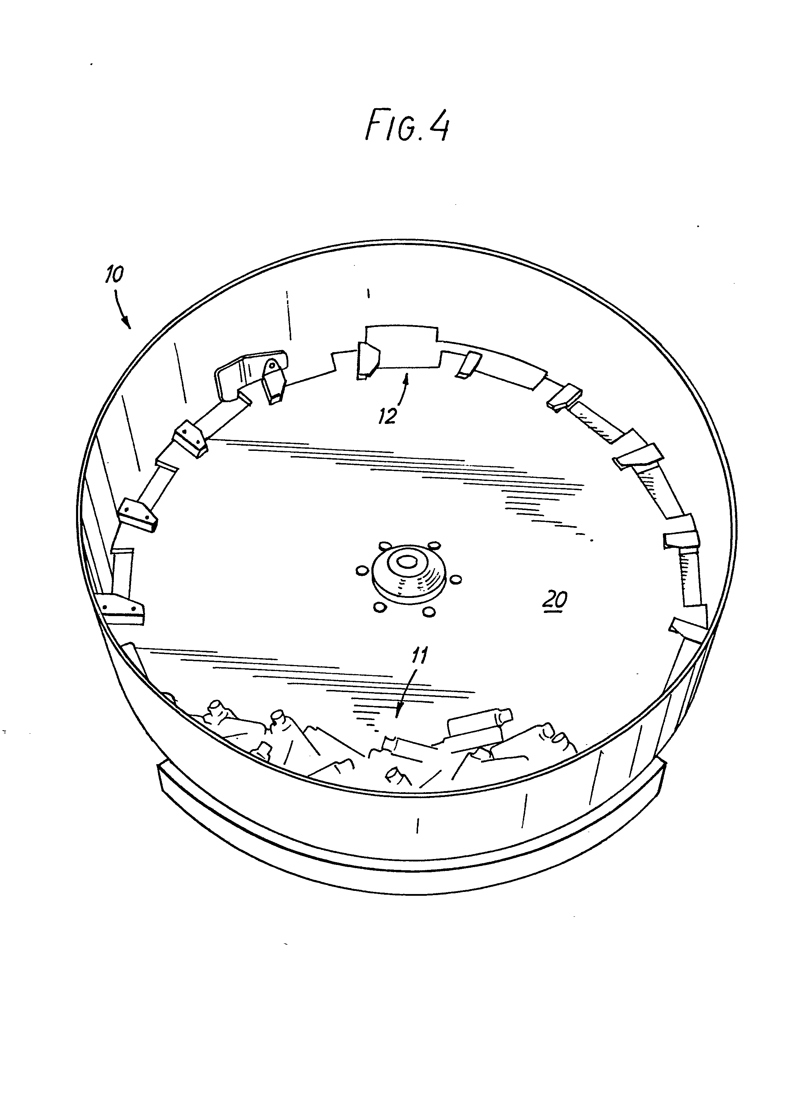

In Figs. 1 to 3 of the drawings only that part of the apparatus incorporating the orientating means has been shown. It will be understood that the apparatus ·of the drawings has the following features, some of which are illustrated in Figs. 4 to 6.

The orientating apparatus has a bowl housing 10, a rotary disc 20 within the housing 10. The disc 20 is inclined to the horizontal. Pockets 30 are associated with the rotary disc 20 for individually receiving an article, e.g. bottles B. The disc 20, when driven, transports the bottles B each in a pocket 30 with their axes extending longitudinally of the pocket 30 from a pick-up location at a nadir 11 of the bowl 10. Articles, e.g. bottles B, delivered to the bowl housing 10 with random orientation fall towards a discharge location 12 at or near a zenith of the bowl 10 and disc 20 interface.

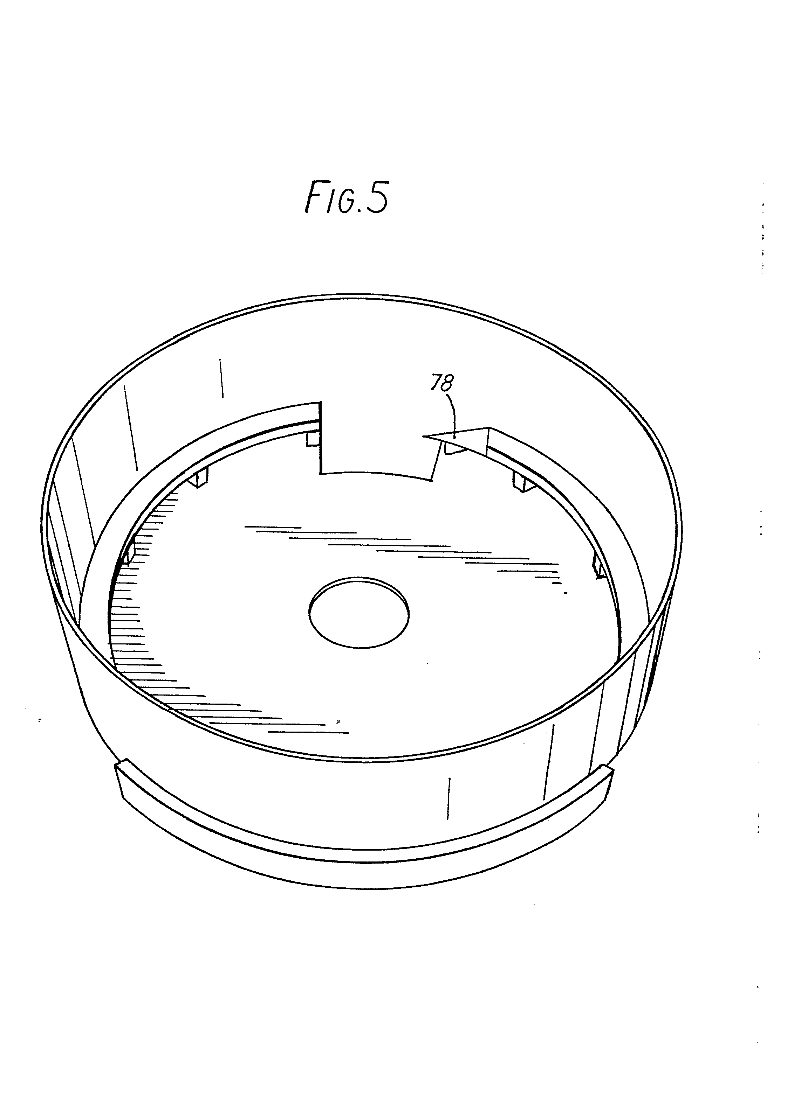

At the discharge location 12, each article B is discharged from its pocket 30. Orientating means 60 is associated with each pocket 30 to ensure a predetermined attitude of each article B as the article leaves its pocket 30. A stationary support member 76 (Fig. 5) below the rotary disc 10 extends between the pick-up location at the nadir 11 and discharge location 12 thereby retaining each article B horizontally disposed in its pocket 30 to the discharge location 12.

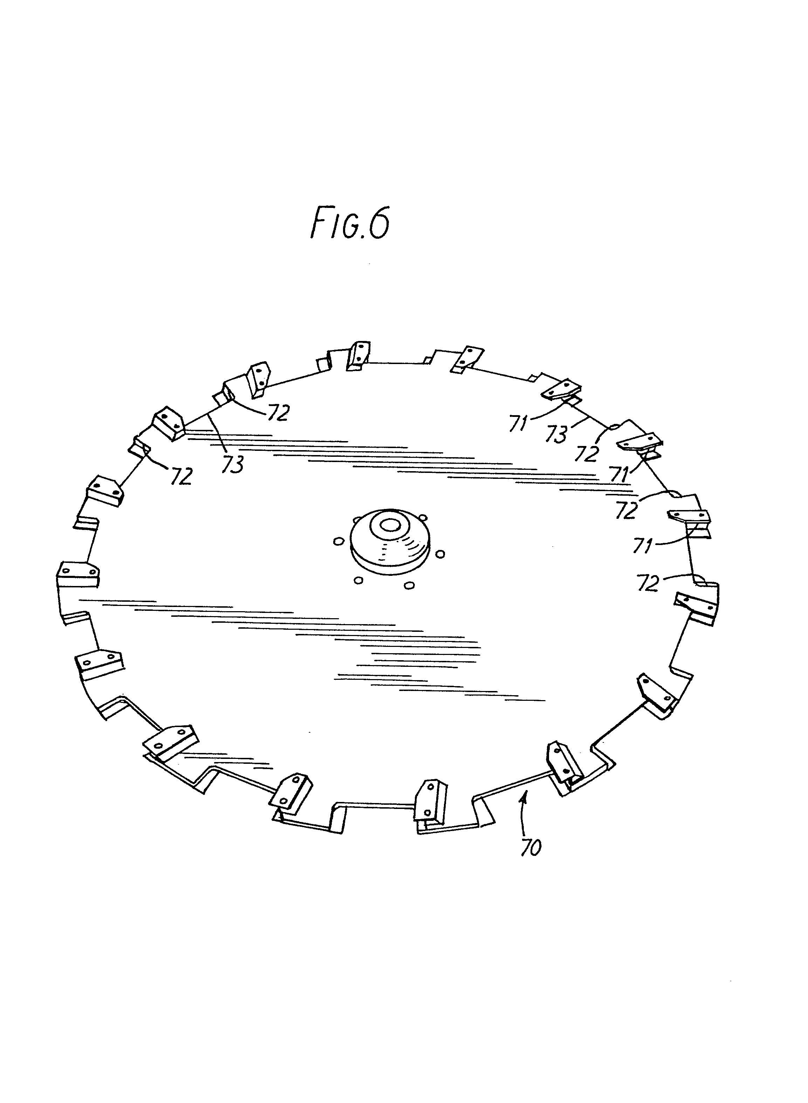

As may be clearly seen from Fig. 6 the rotary disc 10 of the apparatus of these embodiments has peripheral apertures 70. The apertures 70 define the pockets 30. Each aperture 70 is bound by a pair of radially extending edge portions 71,72 of the rotary disc 20. These edges 71,72 define spaced, opposed lateral sides of each aperture 70 and a circumferentially extending edge portion 73 of the pocket 30 extends between said lateral sides 71,72 at the radially inner ends thereof. It will be noted that in Fig. 6 a plurality of pockets 30 (defined by apertures 70) are regularly spaced around the periphery of the rotary disc 20.

Reference is now made to Figs. 1A and 1B of the drawings, which each show a single pocket 30. The pocket 30 is seen in elevation from outside the periphery of the disc 20 and arrow A indicates the direction of rotation when the disc 20 is rotated. In Figs. 1A and 1B the orientating means 60 for a pocket 30 has a first orientating member 61 located relative to the rotary disc 20 at a spaced position below a first said lateral edge 71 and extending towards the second said lateral edge 72. In addition, a second orientating member 62 is located relative to the rotary disc 20 at a spaced position below the second said lateral edge 72 and extending towards the first said lateral edge 71. A pair of spacer means 65,66 are provided for mounting the orientating members 61,62 adjacent to the lateral edge 71,72 on the disc 20.

Means 64, such as screws, are provided for releasably mounting each of the first and second orientating members 61,62 on their spacer means 65,66.

With this arrangement of orientating members 61, 62 their separation can be matched to the length of article, e.g. the dimension L of the body portion of a bottle B, which is received in a pocket 30, whereby a single orientating apparatus may be readily tooled for a particular article.

In Figs. 1A and 1B the orientating means 60 further includes a third orientating member 63 located relative to the rotary disc 20 at a spaced position above the first lateral edge 71 and extending towards the second said lateral edge 72. A further spacer means 67 is provided for mounting the third orientating member 63 adjacent to the first lateral edge 71. Means 68, such as screws, are provided for releasably mounting the third orientating member 63 on its spacer means 67. It will be seen from Figs. 1A and 1B (with arrow A indicating the direction of rotation) that the first lateral edge 71 is the trailing one of said first and second lateral edges 71, 72 of the rotary disc 20 in the direction A of rotation thereof. This third orientating member 63 may be employed with advantage. Articles e.g. bottles B, tend to be urged in the direction A of rotation. If the article is a bottle B (for example) and the neck N is leading (Fig.1A), base downward orientation will only occur if the neck N overlies the second orientating member 62. In this instance, the third orientating member 63 acts as an abutment for the base of the article (bottle) thereby ensuring that the neck N does overlie the second orientating member. When a bottle B lies with its neck N trailing relative to the direction of travel A, the neck N will lie between the first and third orientating members 61,63 as shown in Fig. 1B.

In the embodiment of Figs. 1A and 1B spacer means 65,66 space their orientating members 61,62 relative to the rotary disc 20 with a spacing selected such that a median plane through an article of predetermined depth D positioned in a said pocket 30, lies in the plane of the rotary disc 20 as shown in Figs. 1A and 1B.

It will be appreciated that since the mounting means 64 are releasable, the spacer means 65,66 may be replaced, whereby for a given article of the spacer means 65,66 may be selected for spacing their orientating members 61,62 relative to the rotary disc 10 such that a median plane through an article positioned in a said pocket 30, lies in the plane of the rotary disc 20.

The above described embodiment of Figs. 1A and 1B has orientating means 60 which are selectable at the time that the apparatus is assembled, such that a single apparatus can be customised for orientating articles, such as bottles B, of a particular size. This enables the apparatus to be assembled to accommodate different user requirements with considerable ease. Furthermore, by releasably mounting the spacer means 65-67 and the orientating members 61-63, after use with articles of one size the apparatus may subsequently be readily adapted for subsequent use with articles having a different dimension for dimension L and/or dimension D. Since the orientating means are solely associated with the rotary disc 20 and since the rotary disc 20 (see Fig.6) may be readily releasable from the apparatus, the down-time involved is minimized.

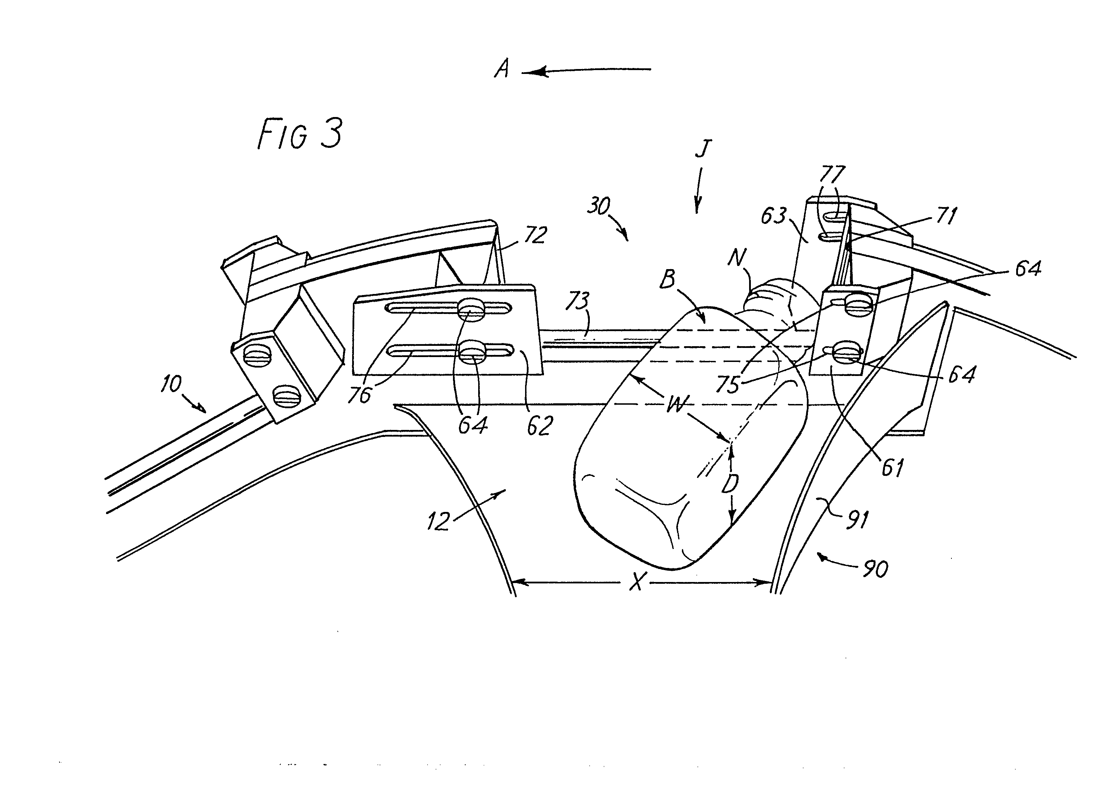

A generally similar embodiment will now be described with reference to Figs. 2 and 3. In this embodiment provision is made for the orientating means 60 and the pocket 30 to be adjustable, subsequent to assembly, thereby to permit the use of the machine, without any changes of structural components, for orientating successive batches of articles (each batch having different dimensions), simply by adjusting the apparatus between runs. The elimination of the need to change or replace structural components still further reduces the down-time. Furthermore, this construction of apparatus reduces the manufacturers costs since a given range of structural components can be employed in apparatus for a whole range of sizes of articles.

In the description of Figs. 2 and 3, like numerals are employed for similar parts to those shown in Figs. 1A and 1B. As shown the means for 64,68 mounting orientating members 61-63 on their spacer means 65-67 co-operates with adjustment means in the form of slots 75-77 associated with the orientating members 61-63. The slots 75-75 permit the orientating members 61-63 to be adjusted relative to their spacer means 65-67 according to the dimensions of the article B to be orientated. Clearly, this allows the adjustment of the apparatus for different articles (e.g. bottles B of different body lengths L) between runs of the apparatus for successive batches of different articles.

In the embodiment of the orientating apparatus of Fig. 2 at each aperture 60 the circumferentially extending edge portion 73 of the pocket 30 is defined by a disc element 80 mounted on the rotary disc 20. The disc elements 80 are releasably mounted by mounting means, such as screws 81 and the apparatus can be initially set up by suitable choice of disc element 80 to ensure a radial pocket dimension suitable for an article of a given width W. Each different article width W requires a disc element 80 of a related radial dimension (when mounted). Such arrangements enable a single apparatus to be customised for articles having different widths.

As clearly illustrated in Fig. 2, the disc element 80 has associated adjustment means, formed by slots 82 whereby the width of the pocket (its radially extending dimension) may be varied for different article widths W. This arrangement has the further advantage that a single apparatus may be adjusted between batches of articles of different widths W, whereby the apparatus may be used to orientate a batch of articles of a first width W1 and then for a subsequent use the disc elements 80 may be adjusted such that the pockets widths are thereafter suitable to orientate a batch of articles of a second width W2.

In a modification (not shown) the orientating apparatus has means for adjusting the spacing between the rotary disc 20 and the support means 76 below the rotary disc 20. Such adjustment permits this spacing to be adjusted in accordance with the depth D of articles to be orientated. In this way, an article B having its median plane lying in the median plane of the rotary disc 10 also rests on the support means 76. This adjustment may be facilitated by adjustably mounting the rotary disc 10 on its shaft whereby its height above the floor 76 may be varied. Alternatively, the support means 76 may be a support disc or segment having a discharge aperture therein for location at the discharge location 12. The provision for adjustment of the spacing between the support disc 76 and rotary disc 20 may be effected either (a) by mounting the support disc 70 on the bowl housing 10 by means of adjustable mounting means (not shown) at circumferentially spaced locations around this support disc 76, or (b) non-rotatably mounting the support disc 76 on a drive shaft for rotating the rotary disc 20 by means of a collar (not shown) which is adjustable axially relative to the shaft.

In each of the above embodiments, there is provided a single discharge chute 90 at the discharge location 12. Pneumatic means are provided for accelerating articles B entering the chute 90 away from the discharge location 12.

The pneumatic means comprise air jets J located above the discharge location 12. Alternatively, the chute 90 may have a configuration designed to produce a venturi effect on articles B entering the chute 90. Still alternatively the pneumatic means may be provided by arranging that the air pressure at the chute 90 immediately below the discharge station 12 is sub-atmospheric, for example by means of air outlets (not shown) in the chute wall 91 or/walls 91,92 the outlets (not shown) being in communication with suction means. The air jets J above the discharge location 12 may be employed in combination with the venturi means or suction means. The air jets J also assist the dispatch of the article B from its pockets 30 in addition to any acceleration of the article B in the chute 90 which may also result (depending on the air pressure applied).

The advantage that accrues from the use of pneumatic means to accelerate the articles B relates to the need to ensure that the chute 90 has sufficient clear space adjacent the discharge location 12 to receive an article B from the next pocket 30 when that succeeding pocket 30 arrives at the discharge location 12. As the chute 90 is itself stationary, the radial inertia of the articles B delivered to the chute 90 is dissipated when the articles B enter the chute 90. The width X (Fig. 3) of the chute (its dimension in the direction of rotation of the rotary disc) may converge from its maximum dimension at the discharge location 12 to a reduced dimension at a level below the discharge location 12, as shown in Fig. 3. Once articles B have travelled down the discharge chute 90 their inertia is solely in their longitudinal direction of travel down the chute 90. In view of this, the provision of prior art machines for further rotation of the articles B in order to stabilize them becomes unnecessary.

According to a modification (not shown), the spacer means 65,66 may be adjustable for varying the spacing of the orientating members 61,62 relative to the rotary disc 20. Such spacer means 65,66 may then be adjusted for an article of particular depth D to ensure that a median plane through that article B, when positioned in a pocket 30 lies in the plane of the rotary disc 20. Likewise the spacer means 67 may be adjustable to enable the separation between the first and third orientating members 61,63 to be adjusted to accommodate therebetween articles, e.g. bottles with differently dimensioned leading (trailing) parts, viz the neck N.

The operation of the orientating means 60 will now be briefly described. This description applies equally to the embodiments of Figs. 1A, 1B and Figs. 2,3. As seen in Figs. 1A and 1B, the article, in this case a bottle B is carried in the pocket 30 such that it lies with its longitudinal axis extending in the direction A of rotation. In Fig. 1A the bottle B has its neck N leading in the direction A of rotation of the rotary disc 20 such that the neck N lies on the orientating member 62. In Fig. 1B the bottle B is reversed with respect to the direction A of rotation and the neck N overlies the orientating member 61. In each of Figs. 1A and 1B the bottle is supported in the pocket 30 by the support plate 70 during its travel from the pick-up location at the nadir 11 (Fig. 4) to the discharge location 12 (Fig. 4). At the discharge location 12 the support plate 70 has an opening therein which permits the bottle B to fall into the chute 70 (Fig. 3) under the influence of gravity and aided by jets J. Irrespective of whether the bottle B is travelling with the neck N leading (Fig. 1A) or trailing (Fig. 1B), the neck is momentarily entrained by engagement with an orientating member 61 or 62 whilst the bottle passes base downwardly into the chute 90. As mentioned previously, orientating member 63 ensures that the bottle B with its neck N leading (Fig. 1A) lies with the neck over the orientating member 62. If in Fig. 1A the neck N could travel rearwardly of the orientating member 62, then there would be a risk of the neck N unintentionally falling first into the chute 90.

If a bottle B enters a pocket 30 at the pick-up location in an elevated attitude (i.e. not lying in its pocket 30), then it will not be in the desired attitude at the discharge location 12. In order to avoid such improperly placed articles reaching the discharge location 12, a wiper blade (not shown) but known in the art is arranged in advance of the discharge location to clear such articles/bottles from the pockets 30. Because of the inclination of the rotary disc 20, such articles will again fall to the nadir 11.

In the above described specific embodiments, the orientating members 61,62 are adapted to orientate the bottles such that the neck N is entrained as the bottle falls into the discharge chute 90 at the discharge location 12. This leads to the bottles B being delivered into chute 90 with the neck uppermost. By modifying the orientating members 61,62 the arrangement may cause the bottles B to be discharged at the chute 90 with the necks N downwards. This is particularly advantageous when the bottles B are to be scavaged subsequently, for example, with inert gas to remove debris or contaminents.

For this purpose, each of the orientating members 61,62 is increased in length (by comparison with the illustrative drawing of Figs. 1A and 1B) such that they are spaced by a separation which is less than the length L of the main body portion of the bottle. In addition, each orientating member 61,62 has a centred cut-out portion which enables the neck N of the bottle B to pass therethrough at the discharge location 12. It will be readily apparent that, as a bottle B reaches the discharge location 12, the main body of the bottle B will be entrained by the orientating members 61,62 extending below it at either end. However, the neck N will be free to fall before the main body of the bottle B. Thus, the bottles B are delivered in an attitude in which the neck N is downwardly directed. The third orientating member 63 ensures that, when the neck N is leading in the direction of rotation, the main body of the bottle still overlies the trailing orientating member 61. The cut-out portion of the members 61,62 may be dimensioned to accommodate bottles with different neck diameters. The members 61, 62,63 may be adjustable and/or replaceable as described in the previously illustrated embodiments.

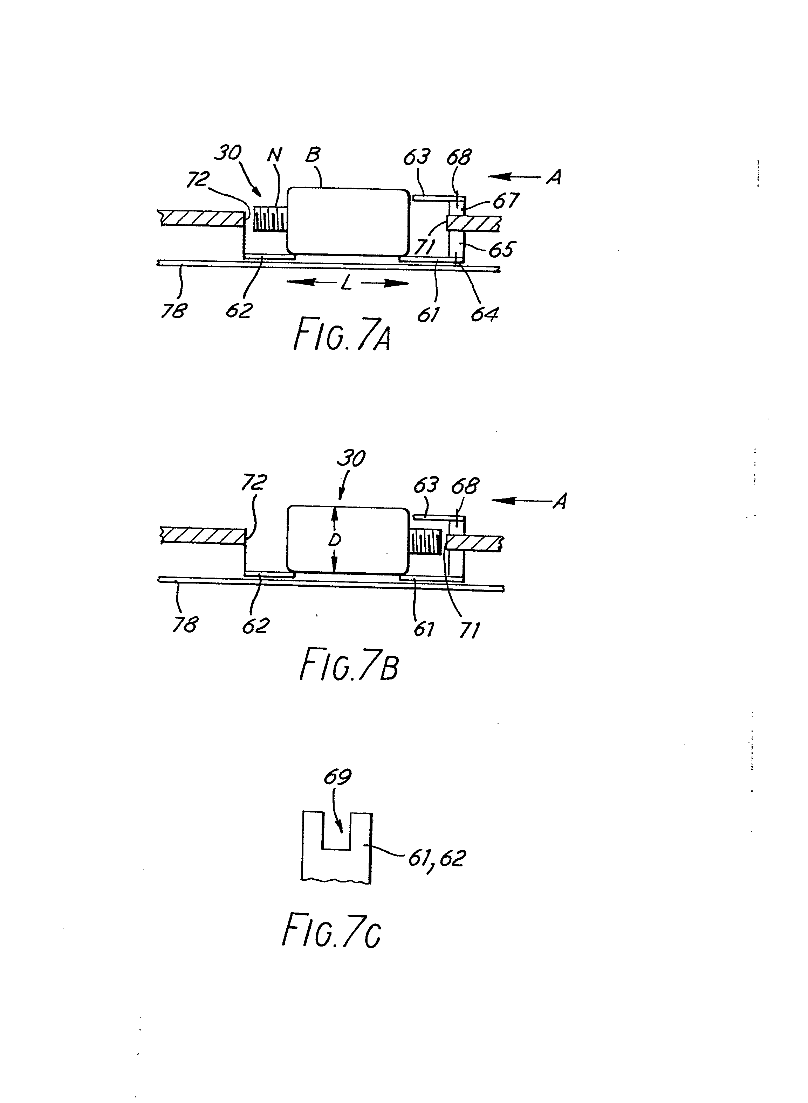

The above described arrangement is shown in Figs. 7A and 7B (which correspond to Figs. 1A, 1B) in which the orientating members 61,62 are adapted for a neck downward delivery attitude of the bottles B. Fig. 7C shows schematically an orientating member (61 or 62) with the cut-out portion 69 which permits the neck N of the bottle B to fall first to the delivery chute 90 whilst the body of the bottle B is momentarily entrained.

CLAIMS:

1. Orientating means for use with orientating apparatus for the type hereinbefore defined having a rotary disc (20) with peripheral apertures (70) defining said pockets (30), each aperture (71,72) being bound by a pair of radially extending edge portions (71,72) of the rotary disc (20) which define spaced, opposed lateral sides of the aperture (70) and a circumferentially extending edge portion (73) of the pocket (30) extending between said lateral sides (71,72) at the radially inner ends thereof, characterised in that said orientating means (60) comprise, for each of a plurality of apertures (70), a first orientating member (61) for location relative to the rotary disc (20) at a spaced position below a first said lateral edge (71) and extending towards the second said lateral edge (72), a second orientating member (62) for location relative to the rotary disc (20) at a spaced position below the second said lateral edge (72) and extending towards the first said lateral edge (71), a pair of spacer means (65,66) each for mounting a respective one of said orientating members (61,62) at or adjacent to a said lateral edge (71,72) on said rotary disc (20), means (64) for mounting each of said first and second orientating members (61,62) on its respective spacer means (65,66).

2. Orientating means as claimed in Claim 1, wherein said orientating means (60) further comprise, for each of said plurality of apertures (70), a third orientating member (63) for location relative to the rotary disc (20) at a spaced position above the first said lateral edge (71) and extending towards the second said lateral edge (72), a further spacer means (67) for mounting the third orientating member (63) at or adjacent to the said first lateral edge (71), means (68) for releasably mounting said third orientating member (63) on its spacer means (67), wherein said first lateral edge (71) is the trailing one of said first and second lateral edges (71,72) of the rotary disc (20) in the direction of rotation (A) thereof.

3. Orientating means as claimed in either Claim 1 or Claim 2, wherein the (first mentioned) spacer means (65,66) space their orientating members (61,62) relative to the rotary disc (20) with a spacing selected such that a median plane through an article (B) of predetermined depth (D) positioned in a said pocket (30) lies in the plane of the rotary disc (20).

4. Orientating means as claimed in either Claim 1 or Claim 2, wherein the (first mentioned) spacer means (65,66) are replaceable whereby for a given article (B) the spacer means (65,66) may be selected for spacing their orientating members (61,62) relative to the rotary disc (20) such that a median plane through an article (B) positioned in a said pocket (30) lies in the plane of the rotary disc (20).

5. Orientating means as claimed in either Claim 1 or Claim 2, wherein the first mentioned spacer means (65,66) are adjustable for varying the spacing of the orientating members (61,62) relative to the rotary disc (20) whereby the spacer means (65,66) may be adjusted for an article of particular dimensions to ensure that a median plane through that article (B) when positioned in a said pocket (30) lies in the plane of the rotary disc (20).

6. Orientating means as claimed in any one of Claims 3 to 5 when dependent from Claim 2, wherein adjustment of the further spacer means (67) is adjustable to enable the separation between the second and third orientating members (62,63) to be adjusted to accommodate differently dimensioned article parts, such as a bottle neck (N) therebetween.

7.   Orientating means as claimed in any one of Claims 1 to 6, wherein said means (64) for mounting said orientating members (61,62) on their spacer means (65,66) co-operates with adjustment means (75-77) associated with the orientating members (61,62)   .
whereby the orientating members (61,62) may be adjusted relative to their spacer means (65,66) according to the dimensions of the article to be orientated.

8.   An orientating apparatus for orientating articles, such as bottles comprising a bowl housing (10), a rotary disc (20) within the housing (10) the disc (20) being inclined to the horizontal, pockets (30) associated with the rotary disc (20) for individually receiving an article, the disc (20) when driven transporting articles each in a pocket (30) with their axes extending longitudinally of the pocket (30) from a pick-up location at a nadir (11) of the bowl (10) to which nadir (11) fall articles delivered to the housing (10) with random orientation towards a discharge location (12) at or near a zenith of the bowl (10) and disc (20) interface at which discharge location (12) each article is discharged from its pocket (30) and orientating means (60) associated with each pocket (30) to ensure a predetermined attitude of the article as the article leaves its pocket (30), a stationary support member (76) below the rotary disc (20) extending between the pick-up and discharge locations (11,12) thereby retaining an article horizontally disposed in its pocket (30) to the discharge location (12), wherein said rotary disc (20) has peripheral apertures defining said pockets, each aperture being bound by a pair of radially extending edge portions (71,72) of the rotary disc (20) which define spaced, opposed lateral sides of the aperture (70) and a circumferentially extending edge portion (73) of the pocket (30) extending between said lateral sides (71,72) at the radially inner ends thereof, characterised in that said orientating means (60) comprise, for each of a plurality of apertures (30),

a first orientating member (61) located relative to the rotary disc (20) at a spaced position below a first said lateral edge (71) and extending towards the second said lateral edge (72),

a second orientating member (62) located relative to the rotary disc (20) at a spaced position below the second said lateral edge (72) and extending towards the first said lateral edge (71),

a pair of spacer means (65,66) each for mounting a respective one of said orientating members (61,62) at or adjacent to a said lateral edge (71,72) on said rotary disc (20),

means (64) for releasably mounting each of said first and second orientating members (61,62) on its respective spacer means (65,66).

9. Apparatus as claimed in Claim 8 wherein, at each of said plurality of apertures (70), the circumferentially extending edge portion (73) of the pocket is defined by a disc element (80) mounted on the rotary disc (20).

10. Apparatus as claimed in Claim 9, wherein at each said aperture (70) the disc element (80) has associated adjustment means (82) whereby the width of the pocket (its radially extending dimension) may be varied for different article widths (W).

11. Apparatus as claimed in any one of Claims 8 to 10, further comprising a single discharge chute (90) at the discharge location (12) characterised in that pneumatic means (J) are provided for accelerating articles (B) entering said chute (90) away from the discharge location (12).

12. Apparatus as claimed in Claim 11, wherein the chute (90) has a configuration designed to produce a venturi effect on articles(B) entering the chute (90).

FIG.1A

FIG.1B

FIG.2

0065866

1/6

FIG 3

0065866

*FIG.4*

FIG.5

FIG.6

FIG.7A

FIG.7B

FIG.7c

## EUROPEAN SEARCH REPORT

Application number

EP 82302513.5

### DOCUMENTS CONSIDERED TO BE RELEVANT

| Category | Citation of document with indication, where appropriate, of relevant passages | Relevant to claim |
|---|---|---|
| D,A | <u>AU - B1 - 31 870/77</u> (HOEHN) <br> & GB-A-1 558 379 (HOEHN) <br> -- | 1,8 |
| D,A | <u>GB - A - 1 534 207</u> (RATIONATOR-MASCHINENBAU GMBH) <br> ---- | 1,8 |

**CLASSIFICATION OF THE APPLICATION (Int. Cl. 3)**

B 65 G 47/24

**TECHNICAL FIELDS SEARCHED (Int.Cl. 3)**

B 65 G 47/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims |
|---|---|

| Place of search | Date of completion of the search | Examiner |
|---|---|---|
| VIENNA | 16-08-1982 | PISSENBERGER |

EPO Form 1503.1 06.78